# EUROPÄISCHE PATENTANMELDUNG

(11) **EP 4 207 939 A1**
(43) Veröffentlichungstag der Anmeldung: **05.07.2023**
(21) Anmeldenummer: 22204030.5
(22) Anmeldetag: 27.10.2022
(51) Int. Cl.: H05B 1/02, A47J 27/21

(54) **VORRICHTUNG ZUM ERHITZEN VON WASSER, VERFAHREN ZUM IDENTIFIZIEREN EINER VERKALKUNG, ELEKTROGERÄT**

(30) Priorität: 30.12.2021 DE 102021215091
(71) Anmelder: Robert Bosch GmbH, 70442 Stuttgart (DE)
(72) Erfinder: Bauer, Harald, 71139 Ehningen (DE)

(57) **Zusammenfassung**

Die Erfindung betrifft eine Vorrichtung zum Erhitzen von Wasser weist ein Gefäß und ein elektrisches Heizelement auf, wobei das elektrische Heizelement eingerichtet ist, mittels elektrischer Leistungsaufnahme eine Temperatur von im Gefäß angeordneten Wasser zu erhöhen. Die Vorrichtung zum Erhitzen von Wasser weist ferner eine Verkalkungserfassungsvorrichtung auf. Die Verkalkungserfassungsvorrichtung ist eingerichtet, eine Leistungsaufnahme des elektrischen Heizelements der Vorrichtung zum Erhitzen von Wasser und eine weitere Messgröße zu messen, die Leistungsaufnahme und die weitere Messgröße in Relation zu setzen, sowie ein Verkalkungssignal auszugeben, wenn die Relation der Leistungsaufnahme und der weiteren Messgröße um eine vorgegebene Mindestabweichung von einem Referenzwert abweicht.

## Beschreibung

Die Erfindung betrifft eine Vorrichtung zum Erhitzen von Wasser, ein Verfahren zum Identifizieren einer Verkalkung sowie ein Elektrogerät.

### Stand der Technik

Aus dem Stand der Technik sind Elektrogeräte bekannt, bei denen Wasser erhitzt und/oder verdampft wird. Diesen können durch Überschreitung des Löslichkeitsproduktes verkalken, so dass feste Ablagerungen beispielsweise aus Ca-CO3, MgCO3, Ca(HCO3)2, Mg(HCO3)2, Ca(OH)2, Mg(OH)2, CaSO4, CaCI2, MgCI2 oder CaF2 gebildet werden. Diese Ablagerungen müssen regelmäßig und rechtzeitig entfernt werden, da diese Ablagerungen geringe Wärmeleitfähigkeiten aufweisen und dadurch die zur Erhitzung und/oder Verdampfung notwendige Energie (Wärme) das zu erhitzende und/oder zu verdampfende Wasser immer schlechter erreicht, da eine Wärmedämmung durch eine Kalkschicht gegeben ist. Die Wärmedämmung führt einerseits zu einem erhöhten Heizbedarf und kann ferner zu lokaler Überhitzung führen mit daraus folgenden Materialversagen. Dies kann sich beispielsweise durch Risse bemerkbar machen, so dass das Elektrogerät undicht wird.

Ferner ist aus dem Stand der Technik bekannt, Sensoren zu verwenden, um den Verkalkungszustand zu erfassen, damit Elektrogeräte wie beispielsweise Dampfgarer, Kaffeemaschinen, Bügeleisen oder Geräte zur Trinkwassererzeugung mittels Destillation oder Wärmeübertrager rechtzeitig gereinigt beziehungsweise entkalkt werden können um einem erhöhten Energieverbrauch (Vermeidung von unnötigen CO2-Emissionen) und Defekten vorzubeugen. Die Druckschrift DE 198 25 981 A1 offenbart ein Verfahren, bei dem die Verkalkung optisch erfasst wird. Die Druckschrift DE 199 60 497 A1 offenbart ein Verfahren, bei dem eine lokale Änderung einer Wandtemperatur ausgewertet wird.

### Offenbarung der Erfindung

Eine Aufgabe der Erfindung ist es, eine verbesserte Vorrichtung zum Erhitzen von Wasser bereitzustellen. Eine weitere Aufgabe der Erfindung ist es, ein verbessertes Verfahren zum Identifizieren einer Verkalkung bereitzustellen. Eine weitere Aufgabe der Erfindung ist es, ein verbessertes ein Elektrogerät bereitzustellen.

Diese Aufgaben werden mit den Gegenständen der unabhängigen Patentansprüche gelöst. Vorteilhafte Weiterbildungen sind in den abhängigen Patentansprüchen angegeben.

Eine Vorrichtung zum Erhitzen von Wasser weist ein Gefäß und ein elektrisches Heizelement auf, wobei das elektrische Heizelement eingerichtet ist, mittels elektrischer Leistungsaufnahme eine Temperatur von im Gefäß angeordneten Wasser zu erhöhen. Die Vorrichtung zum Erhitzen von Wasser weist ferner eine Verkalkungserfassungsvorrichtung auf. Die Verkalkungserfassungsvorrichtung ist eingerichtet, eine Leistungsaufnahme des elektrischen Heizelements der Vorrichtung zum Erhitzen von Wasser und eine weitere Messgröße zu messen, die Leistungsaufnahme und die weitere Messgröße in Relation zu setzen, sowie ein Verkalkungssignal auszugeben, wenn die Relation der Leistungsaufnahme und der weiteren Messgröße um eine vorgegebene Mindestabweichung von einem Referenzwert abweicht.

Eine Verkalkung der Vorrichtung zum Erhitzen von Wasser kann also die Relation der Leistungsaufnahme und der weiteren Messgröße erfolgen. Die Verkalkungserfassungsvorrichtung kann dabei entsprechende Sensoren zum Erfassen der Leistungsaufnahme und der weiteren Messgröße aufweisen. Insbesondere kann eine Veränderung der weiteren Messgröße in Abhängigkeit von der dafür notwendigen Heizleistung als Relation der Leistungsaufnahme und der weiteren Messgröße verwendet werden.

Die Erfassung einer Kalkschicht erfolgt also indirekt über die Erfassung der Leistungsaufnahme und der weiteren Messgröße. Eine Erfassung, die auf eine direkte Messung der Kalkschicht abzielen würde, wäre fehlerbehaftet, da Eigenschaften der Kalkschicht wie beispielsweise Schichtdicke, Morphologie, Wärmeleitfähigkeit usw. abhängig von der Wasserqualität und den örtlichen Bedingungen wie Temperatur und Strömung wären. Eine Wärmeleitfähigkeit von CaCO3 kann beispielswiese im Bereich von 0,35 W(m*K) bis 2,9 W/(m*K) variieren Außerdem müsste der Sensor an einer Stelle platziert werden, die repräsentativ verkalkt - mit Extrapolation auf das integrale Verhalten des Wärmeübertragers oder Elektrogeräts. Bei großen Wärmeübertragern ist eine Aussage zur Wärmedämmung zudem schwierig, da lokal an manchen Stellen bereits sehr dicke Schichten entstanden sein können, wohingegen andere Stellen noch blank sind. Die Verwendung von Sensorik im Wasser ist schwierig, da die Sensorik mit gereinigt werden muss und bekannt ist, dass sich das Verkalkungsverhalten gereinigter Oberflächen von neuen Oberflächen unterscheiden kann und auch die Verkalkungsneigung unterschiedlicher Oberflächen (Sensor, Gefäß, Wärmeübertrager) in Abhängigkeit der unbekannten oder schwankenden Wasserqualität unterschiedlich driften kann. Diese Nachteile werden durch die indirekte Erfassung der Kalkschicht vermieden.

Es kann vorgesehen sein, dass für ein erster zeitlicher Verlauf der Leistungsaufnahme und ein zweiter zeitlicher Verlauf der weiteren Messgröße ermittelt werden, und der erste zeitliche Verlauf mit einem ersten Referenzverlauf und der zweite zeitliche Verlauf mit einem zweiten Referenzverlauf zur Ermittlung der Relation der Leistungsaufnahme und der weiteren Messgröße ausgewertet werden. Dies ermöglicht eine genauere Bestimmung und einen genaueren Vergleich mit der Referenz.

In einer Ausführungsform beinhaltet die Verkalkungserfassungsvorrichtung einen Strommesser und/oder einen Spannungsmesser zur Ermittlung der Leistungsaufnahme. Dies ermöglicht eine genaue Bestimmung der Leistungsaufnahme. Der Strommesser kann beispielsweise ein Amperemeter umfassen. Der Spannungsmesser kann beispielsweise ein Voltmeter umfassen. Eine Leistung kann beispielsweise als ein Produkt aus einer gemessenen Stromstärke und einer gemessenen Spannung berechnet werden.

In einer Ausführungsform umfasst die weitere Messgröße eine Temperatur. Die Verkalkungserfassungsvorrichtung beinhaltet ein Thermometer zur Ermittlung der weiteren Messgröße. In dieser Ausführungsform kann beispielsweise ausgewertet werden, welche aufgenommene Leistung zu welcher Temperaturerhöhung führt und dies mit einem entsprechenden Referenzwert für ein nicht verkalktes Gefäß verglichen werden. Diese Ausführungsform ist insbesondere geeignet, wenn Wasser erhitzt, aber nicht verdampft werden soll.

In einer Ausführungsform umfasst die weitere Messgröße eine Menge eines verdampften Wassers. Die Verkalkungserfassungsvorrichtung beinhaltet eine Massenermittlungsvorrichtung zur Ermittlung der weiteren Messgröße. In dieser Ausführungsform kann beispielsweise ausgewertet werden, welche aufgenommene Leistung benötigt wird, um eine bestimmte Wassermenge zu verdampfen und dies mit einem entsprechenden Referenzwert für ein nicht verkalktes Gefäß verglichen werden. Diese Ausführungsform ist insbesondere geeignet, wenn Wasser verdampft werden soll.

Die beiden vorgenannten Methoden können auch kombiniert werden, wenn die Verkalkungserfassungsvorrichtung sowohl das Thermometer als auch die Massenermittlungsvorrichtung umfasst und sowohl die Temperatur als auch die Masseänderung mit einem entsprechenden Referenzwert abgeglichen wird. Beispielsweise kann dann für Temperaturen unter der Siedetemperatur von Wasser die Relation zwischen Leistungsaufnahme und Temperatur und für Temperaturen oberhalb der Siedetemperatur von Wasser die Relation zwischen Leistungsaufnahme und Masseänderung ausgewertet und mit dem entsprechenden Referenzwert verglichen werden.

In einer Ausführungsform umfasst die Verkalkungserfassungsvorrichtung einen Speicher. Die Verkalkungserfassungsvorrichtung ist eingerichtet, im Speicher die Relation der Leistungsaufnahme und der weiteren Messgröße abzulegen und aus der die Relation der Leistungsaufnahme und der weiteren Messgröße den Referenzwert zu bestimmen. Dies kann beispielsweise für neue oder gerade entkalkte Vorrichtungen zum Erhitzen von Wasser genutzt werden, so dass der Referenzwert bei einer Erstinbetriebnahme oder bei der ersten Inbetriebnahme nach dem Entkalken neu ermittelt werden. Dies ermöglicht, Änderungen der Vorrichtung zum Erhitzen von Wasser, die langsamer ablaufen als die Verkalkung, aber auch gegebenenfalls einen Einfluss auf die Relation der Leistungsaufnahme und der weiteren Messgröße haben, zu ignorieren, da nach jeder Entkalkung die Relation der Leistungsaufnahme und der weiteren Messgröße neu ermittelt wird.

In einer Ausführungsform ist die Verkalkungserfassungsvorrichtung eingerichtet, eine Betriebsdauerinformation zu ermitteln, wobei die Betriebsdauerinformation mit einer Betriebsdauer bis zur Ausgabe des Verkalkungssignals korreliert. Die Verkalkungserfassungsvorrichtung ist außerdem eingerichtet, bei Erreichen von einem vorgegebenen Bruchteil der Betriebsdauer bis zur Ausgabe des Verkalkungssignals ein Verkalkungsvorwarnsignal auszugeben. Das Verkalkungsvorwarnsignal wird also anhand einer Betriebsdauer ausgegeben, wobei die Betriebsdauer anhand einer zuvor ermittelten Verkalkung ermittelt wird. Dies kann beispielsweise für ein Neugerät nach einer ersten Entkalkung verwendet werden, um für spätere Betriebszyklen schon vor Erreichen einer Verkalkung ein Verkalkungsvorwarnsignal auszugeben.

In einem Verfahren zum Identifizieren einer Verkalkung einer Vorrichtung zum Erhitzen von Wasser werden die folgenden Schritte durchgeführt:
- Messen einer Leistungsaufnahme eines elektrischen Heizelements der Vorrichtung zum Erhitzen von Wasser und einer weiteren Messgröße;
- In Relation setzen der Leistungsaufnahme und der weiteren Messgröße;
- Ausgabe eines Verkalkungssignals, wenn die Relation der Leistungsaufnahme und der weiteren Messgröße um eine vorgegebene Mindestabweichung von einem Referenzwert abweicht.

Dieses Verfahren kann von einer Verkalkungserfassungsvorrichtung einer Vorrichtung zum Erhitzen von Wasser durchgeführt werden und weist die im Zusammenhang mit der Vorrichtung zum Erhitzen von Wasser beschriebenen Vorteile auf.

In einer Ausführungsform des Verfahrens wird die Relation der Leistungsaufnahme und der weiteren Messgröße in einem Speicher abgelegt. Aus der Relation der Leistungsaufnahme und der weiteren Messgröße wird der Referenzwert ermittelt und ebenfalls im Speicher abgelegt.

In einer Ausführungsform des Verfahrens wird eine Betriebsdauerinformation ermittelt, wobei die Betriebsdauerinformation mit einer Betriebsdauer bis zur Ausgabe des Verkalkungssignals korreliert. Bei Erreichen von einem vorgegebenen Bruchteil der Betriebsdauer bis zur Ausgabe des Verkalkungssignals wird ein Verkalkungsvorwarnsignal ausgegeben.

Die Erfindung betrifft außerdem ein Elektrogerät mit einer erfindungsgemäßen Vorrichtung zum Erhitzen von Wasser. Das Elektrogerät kann beispielsweise ein Dampfgarer, ein Dampfbügeleisen, eine Kaffeemaschine, ein Wasserkocher, ein Destillationsgerät zur Trinkwassererzeugung oder ähnliches sein.

Ausführungsbeispiele der Erfindung werden anhand der folgenden Zeichnungen erläutert. In der schematischen Zeichnung zeigen:
- Fig. 1: eine Vorrichtung zum Erhitzen von Wasser;
- Fig. 2: eine weitere Vorrichtung zum Erhitzen von Wasser; und
- Fig. 3: ein Elektrogerät mit einer Vorrichtung zum Erhitzen von Wasser.

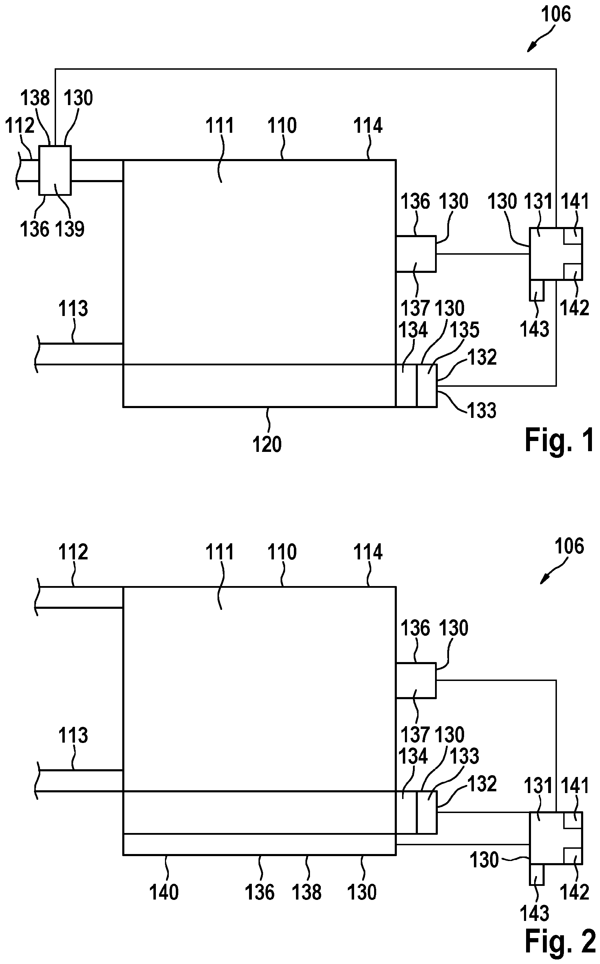

Fig. 1 zeigt eine Vorrichtung 100 zum Erhitzen von Wasser 111, aufweisend ein Gefäß 110 und ein elektrisches Heizelement 120. Das Wasser 111 ist im Gefäß 110 angeordnet. Das elektrische Heizelement 120 ist eingerichtet, mittels elektrischer Leistungsaufnahme eine Temperatur des im Gefäß 110 angeordneten Wassers 111 zu erhöhen. Die Vorrichtung 100 zum Erhitzen von Wasser 111 weist ferner eine Verkalkungserfassungsvorrichtung 130 auf. Die Verkalkungserfassungsvorrichtung 130 ist eingerichtet, eine Leistungsaufnahme des elektrischen Heizelements 120 der Vorrichtung 100 zum Erhitzen von Wasser 111 zu messen. Dazu weist die Verkalkungserfassungsvorrichtung 130 ein erstes Messelement 132 auf. Die Verkalkungserfassungsvorrichtung 130 ist ferner eingerichtet, eine weitere Messgröße zu messen. Dazu weist die Verkalkungserfassungsvorrichtung 130 ein zweites Messelement 136 auf. Die Leistungsaufnahme und die weitere Messgröße können an eine Steuereinheit 131 der Verkalkungserfassungsvorrichtung 130 weitergegeben werden. In der Steuereinheit 131 kann ein Verfahren ablaufen, bei dem die Leistungsaufnahme und die weitere Messgröße in Relation gesetzt werden. Ferner kann die Steuereinheit über eine Ausgabeschnittstelle 142 ein Verkalkungssignal ausgeben, wenn die Relation der Leistungsaufnahme und der weiteten Messgröße um eine vorgegebene Mindestabweichung von einem Referenzwert abweicht.

In Fig. 1 sind weitere optionale Merkmale dargestellt. Diese werden im Folgenden im Rahmen von weiteren Ausführungsbeispielen genauer erläutert.

In einem Ausführungsbeispiel weist das erste Messelement 132 der Verkalkungserfassungsvorrichtung 130 einen Leistungsmesser 133 auf. Dieser kann einen Strommesser 134 und/oder einen Spannungsmesser 135 zur Ermittlung der Leistungsaufnahme beinhalten. Die Heizleistung kann dabei insbesondere als Produkt einer mit dem Strommesser 134 gemessenen Stromstärke und einer mit dem Spannungsmesser 135 gemessenen Spannung bestimmt werden.

In einem Ausführungsbeispiel umfasst die weitere Messgröße eine Temperatur. Die Verkalkungserfassungsvorrichtung 130 beinhaltet als zweites Messelement 136 ein Thermometer 137 zur Ermittlung der zweiten Messgröße. In diesem Ausführungsbeispiel kann eine Erhöhung der Temperatur des Wassers 111 mit einer aufgenommenen Heizleistung in Relation gesetzt werden. Verkalkt das Gefäß 110, kann nicht mehr die volle Heizleistung zum Erwärmen des Wassers 111 verwendet werden, so dass die zur Erreichung einer vorgegebenen Temperaturdifferenz notwendige Heizleistung größer wird. Dies kann von der Steuereinheit anhand einer Auswertung eines Quotienten aus Heizleistung und dadurch erreichter Temperaturerhöhung und vergleich mit einem Referenzwert erkannt werden und anschließend ein Verkalkungssignal ausgegeben werden.

In einem Ausführungsbeispiel umfasst die weitere Messgröße eine Menge eines verdampften Wassers 111. Das zweite Messelement 136 der Verkalkungserfassungsvorrichtung 130 beinhaltet eine Massenermittlungsvorrichtung 138 zur Ermittlung der Menge des verdampften Wassers 111. Die Massenermittlungsvorrichtung 138 kann beispielsweise als Flussmesser 139 in einem Zulauf 112 des Gefäßes 110 ausgestaltet sein. Dann kann ausgewertet werden, wieviel Wasser 111 über den Zulauf 112 in das Gefäß 110 gelangt. In diesem Fall kann ausgewertet werden, wieviel Heizleistung notwendig ist, um das gesamte im Gefäß 110 angeordnete Wasser 111 zu verdampfen.

Ist sowohl der Flussmesser 139 als auch das Thermometer 137 vorhanden, kann bei der Bestimmung der Relation der Heizleistung zur Temperatur beispielsweise auch noch berücksichtigt werden, wieviel Wasser 111 im Gefäß 110 vorhanden ist, da bei einem nicht vollständig gefüllten Gefäß 110 weniger Heizleistung nötig ist, um eine vorgegebene Temperaturänderung zu erreichen, verglichen mit einem vollen Gefäß 110.

In einem Ausführungsbeispiel umfasst die Steuereinheit 131 der Verkalkungserfassungsvorrichtung 130 einen Speicher 141. Die Verkalkungserfassungsvorrichtung 130 und insbesondere die Steuereinheit 131 ist eingerichtet, im Speicher 141 die Relation der Leistungsaufnahme und der weiteren Messgröße abzulegen und aus der Relation der Leistungsaufnahme und der weiteren Messgröße den Referenzwert zu bestimmen und ebenfalls im Speicher 141 abzulegen. Dies kann beispielsweise für neue oder gerade entkalkte Vorrichtungen 100 zum Erhitzen von Wasser 111 genutzt werden, so dass der Referenzwert bei einer Erstinbetriebnahme oder bei der ersten Inbetriebnahme nach dem Entkalken neu ermittelt werden. Dies ermöglicht, Änderungen der Vorrichtung 100 zum Erhitzen von Wasser 111, die langsamer ablaufen als die Verkalkung, aber auch gegebenenfalls einen Einfluss auf die Relation der Leistungsaufnahme und der weiteren Messgröße haben, zu ignorieren, da nach jeder Entkalkung die Relation der Leistungsaufnahme und der weiteren Messgröße neu ermittelt wird.

In einem Ausführungsbeispiel ist die Verkalkungserfassungsvorrichtung 130 eingerichtet, eine Betriebsdauerinformation zu ermitteln, wobei die Betriebsdauerinformation mit einer Betriebsdauer bis zur Ausgabe des Verkalkungssignals korreliert. Die Verkalkungserfassungsvorrichtung 130 ist ferner eingerichtet, bei Erreichen von einem vorgegebenen Bruchteil der Betriebsdauer bis zur Ausgabe des Verkalkungssignals ein Verkalkungsvorwarnsignal auszugeben. Das Verkalkungsvorwarnsignal wird also anhand einer Betriebsdauer ausgegeben, wobei die Betriebsdauer anhand einer zuvor ermittelten Verkalkung ermittelt wird. Dies kann beispielsweise für ein Neugerät nach einer ersten Entkalkung verwendet werden, um für spätere Betriebszyklen schon vor Erreichen einer Verkalkung ein Verkalkungsvorwarnsignal auszugeben. Beispielsweise kann sich ergeben, dass nach einer Erstinbetriebnahme bis zur Ausgabe des Verkalkungssignals eine Betriebsdauer von zehn Stunden erreicht werden. Das Verkalkungsvorwarnsignal kann beispielsweise nach 80 Prozent der Betriebsdauer, also nach acht Stunden, ausgegeben werden, wobei anschließend das Verkalkungssignal trotzdem erst bei ermittelter Verkalkung ausgegeben wird. Dies ermöglicht beispielsweise abzuschätzen, ob vor einer ausgiebigen Benutzung der Vorrichtung 100 zum Erhitzen von Wasser 111 bereits eine Entkalkung vorgenommen werden sollte, da ansonsten das Verkalkungssignal während der Benutzung auftreten könnte.

Das erwärmte Wasser 111 oder das verdampfte Wasser 111 kann anschließend über einen optionalen Ablauf 113 aus dem Gefäß 110 entfernt werden.

Fig. 2 zeigt eine weitere Vorrichtung 100 zum Erhitzen von Wasser 111, die der Vorrichtung 100 zum Erhitzen von Wasser 111 der Fig. 1 entspricht, sofern im Folgenden keine Unterschiede beschrieben sind. Die Massenermittlungsvorrichtung 138 weist in dieser Ausgestaltung einen Drucksensor 140 auf, mit dem ein Gewicht des Gefäßes 110 und des darin befindlichen Wassers 111 direkt gemessen werden kann und so Rückschlüsse auf die Masse des erhitzten oder verdampften Wassers 111 direkt möglich sind.

Die Verkalkungserfassungsvorrichtung 130 umfasst also wieder sowohl das Thermometer 137 als auch die Massenermittlungsvorrichtung138. Sowohl die Temperatur als auch die Masseänderung können mit einem entsprechenden Referenzwert abgeglichen werden. Beispielsweise kann für Temperaturen unter der Siedetemperatur von Wasser 111 die Relation zwischen Leistungsaufnahme und Temperatur und für Temperaturen oberhalb der Siedetemperatur von Wasser die Relation zwischen Leistungsaufnahme und Masseänderung ausgewertet und mit dem entsprechenden Referenzwert verglichen werden.

Wenn in einer Vorrichtung 100 zum Erhitzen von Wasser 111 Wasser 111 erhitzt und/oder verdampft werden soll ist aus Gründen der Thermodynamik immer die gleiche Energiemenge notwendig. Die aufgewendete Energie (z.B. elektrische Heizleistung) wird jedoch nicht nur vom Heizelement 120 ins Wasser 111 abgegeben, sondern auch an ein Gehäuse 114 des Gefäßes 110, wobei die Energie sich entlang allen Wärmeleitpfaden verteilt. Wenn eine Kalkschicht auf der Wand des Gehäuses 114 gebildet wurde, wird weniger Energie über den vorgesehenen Wärmeleitpfad ins Wasser übertragen. Somit kann für den "nicht verkalkten" Zustand integral angegeben werden, wie schnell die Erwärmung des Wassers und/oder die Verdampfung geschieht. Es kann vorgesehen sein, dass die Erwärmung und die Verdampfung betrachtet werden, und eine Anfangstemperatur sowie eine aktuelle Temperatur mit dem Thermometer 137 und zusätzlich die Masse des im Gefäß 110 vorhandenen Wassers 111 mittels des Flussmessers 139 und/oder des Drucksensors 140 und zusätzlich die Massenänderung durch Verdampfung mittels des Drucksensors 140 ermittelt werden.

Das Gewicht des Gefäßes 110 (wechselbar oder fest verbaut) kann besonders einfach über den Drucksensor 140 erfasst werden, wobei das Gefäß 110 auf den Drucksensor einwirkt. Bei bewegten Systemen wie beispielsweise ein Dampfbügeleisen ist die Kombination mit einem Beschleunigungssensor 143 vorteilhaft. In dieser Ausgestaltung kann ein Gewicht des Gefäßes 110 mit dem darin befindlichen Wasser 111 dann erfolgen, wenn sich die beim ruhenden Dampfbügeleisen erfasst wird ohne die Vorrichtung 100 zum Erhitzen von Wasser 111 nicht bewegt und folglich keine Beschleunigungskräfte auf den Drucksensor 140 wirken.

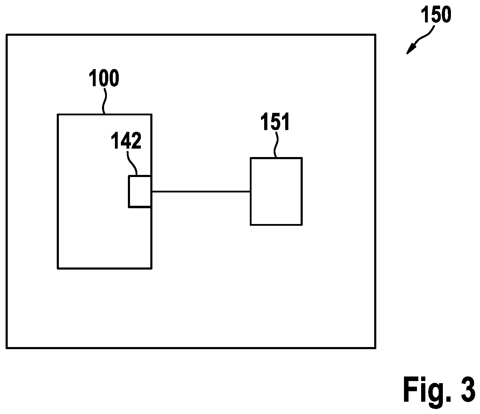

Fig. 3 zeigt ein Elektrogerät 150 mit einer Vorrichtung 100 zum Erhitzen von Wasser 111, die wie im Zusammenhang mit den Figuren 1 und 2 beschrieben ausgestaltet sein kann. Die Ausgabeschnittstelle der Vorrichtung 100 zum Erhitzen von Wasser 111 ist mit einer Anzeige 151 verbunden, wobei über die Anzeige das Verkalkungssignal und gegebenenfalls das Verkalkungsvorwarnsignal ausgegeben werden können. Die Anzeige 151 kann dabei ein Display oder eine Warnlampe oder eine akustische Ausgabeeinheit umfassen.

Das Elektrogerät 150 kann beispielsweise ein Dampfgarer, ein Dampfbügeleisen, eine Kaffeemaschine, ein Wasserkocher, ein Destillationsgerät zur Trinkwassererzeugung oder ähnliches sein.

In einem Verfahren zum Identifizieren einer Verkalkung einer Vorrichtung 100 zum Erhitzen von Wasser 111 werden die folgenden Schritte durchgeführt:
- Messen einer Leistungsaufnahme eines elektrischen Heizelements 120 der Vorrichtung 100 zum Erhitzen von Wasser 111 und einer weiteren Messgröße;
- In Relation setzen der Leistungsaufnahme und der weiteren Messgröße;
- Ausgabe eines Verkalkungssignals, wenn die Relation der Leistungsaufnahme und der weiteren Messgröße um eine vorgegebene Mindestabweichung von einem Referenzwert abweicht.

Dieses Verfahren kann von einer Verkalkungserfassungsvorrichtung einer Vorrichtung zum Erhitzen von Wasser durchgeführt werden und weist die im Zusammenhang mit der Vorrichtung zum Erhitzen von Wasser beschriebenen Vorteile auf.

In einer Ausführungsform des Verfahrens wird die Relation der Leistungsaufnahme und der weiteren Messgröße in einem Speicher 141 abgelegt. Aus der Relation der Leistungsaufnahme und der weiteren Messgröße wird der Referenzwert ermittelt und ebenfalls im Speicher 141 abgelegt.

In einer Ausführungsform des Verfahrens wird eine Betriebsdauerinformation ermittelt, wobei die Betriebsdauerinformation mit einer Betriebsdauer bis zur Ausgabe des Verkalkungssignals korreliert. Bei Erreichen von einem vorgegebenen Bruchteil der Betriebsdauer bis zur Ausgabe des Verkalkungssignals wird ein Verkalkungsvorwarnsignal ausgegeben.

Obwohl die Erfindung im Detail durch die bevorzugten Ausführungsbeispiele beschrieben wurde, ist die Erfindung nicht auf die offenbarten Beispiele eingeschränkt und andere Variationen hieraus können vom Fachmann abgeleitet werden, ohne den Schutzumfang der Erfindung zu verlassen.

## Patentansprüche

1. Vorrichtung (100) zum Erhitzen von Wasser (111), aufweisend ein Gefäß (110) und ein elektrisches Heizelement (120), wobei das elektrische Heizelement (120) eingerichtet ist, mittels elektrischer Leistungsaufnahme eine Temperatur von im Gefäß (110) angeordneten Wasser (111) zu erhöhen, wobei die Vorrichtung (100) zum Erhitzen von Wasser (111) ferner eine Verkalkungserfassungsvorrichtung (130) aufweist, wobei die Verkalkungserfassungsvorrichtung (130) eingerichtet ist, eine Leistungsaufnahme des elektrischen Heizelements (120) der Vorrichtung (100) zum Erhitzen von Wasser (111) und eine weitere Messgröße zu messen, die Leistungsaufnahme und die weitere Messgröße in Relation zu setzen, sowie ein Verkalkungssignal auszugeben, wenn die Relation der Leistungsaufnahme und der weiteten Messgröße um eine vorgegebene Mindestabweichung von einem Referenzwert abweicht.

2. Vorrichtung (100) nach Anspruch 1, wobei die Verkalkungserfassungsvorrichtung (130) einen Strommesser (134) und/oder einen Spannungsmesser (135) zur Ermittlung der Leistungsaufnahme beinhaltet.

3. Vorrichtung (100) nach Anspruch 1 oder 2, wobei die weitere Messgröße eine Temperatur umfasst und die Verkalkungserfassungsvorrichtung (130) ein Thermometer (137) zur Ermittlung der zweiten Messgröße beinhaltet.

4. Vorrichtung (100) nach einem der Ansprüche 1 bis 3, wobei die weitere Messgröße eine Menge eines verdampften Wassers (111) umfasst und die Verkalkungserfassungsvorrichtung (130) eine Massenermittlungsvorrichtung (138) zur Ermittlung der Menge des verdampften Wassers (111) beinhaltet.

5. Vorrichtung (100) nach einem der Ansprüche 1 bis 4, wobei die Verkalkungserfassungsvorrichtung (130) einen Speicher (141) umfasst, wobei die Verkalkungserfassungsvorrichtung (130) eingerichtet ist, im Speicher (141) die Relation der Leistungsaufnahme und der weiteren Messgröße abzulegen und aus der Relation der Leistungsaufnahme und der weiteren Messgröße den Referenzwert zu bestimmen und ebenfalls im Speicher (141) abzulegen.

6. Vorrichtung (100) nach einem der Ansprüche 1 bis 5, wobei die Verkalkungserfassungsvorrichtung (130) eingerichtet ist, eine Betriebsdauerinformation zu ermitteln, wobei die Betriebsdauerinformation mit einer Betriebsdauer bis zur Ausgabe des Verkalkungssignals korreliert, wobei die Verkalkungserfassungsvorrichtung (130) eingerichtet ist, bei Erreichen von einem vorgegebenen Bruchteil der Betriebsdauer bis zur Ausgabe des Verkalkungssignals ein Verkalkungsvorwarnsignal auszugeben.

7. Verfahren zum Identifizieren einer Verkalkung einer Vorrichtung (100) zum Erhitzen von Wasser (111) mit den folgenden Schritten:
- Messen einer Leistungsaufnahme eines elektrischen Heizelements (120) der Vorrichtung (100) zum Erhitzen von Wasser (111) und einer weiteren Messgröße;
- In Relation setzen der Leistungsaufnahme und der weiteren Messgröße;
- Ausgabe eines Verkalkungssignals, wenn die Relation der Leistungsaufnahme und der weiteten Messgröße um eine vorgegebene Mindestabweichung von einem Referenzwert abweicht.

8. Verfahren nach Anspruch 7, wobei die Relation der Leistungsaufnahme und der weiteten Messgröße ferner in einem Speicher (141) abgelegt und der der Referenzwert aus der Relation der Leistungsaufnahme und der weiteten Messgröße ermittelt und ebenfalls im Speicher (141) abgelegt wird.

9. Verfahren nach Anspruch 7 oder 8, wobei eine Betriebsdauerinformation ermittelt wird, wobei die Betriebsdauerinformation mit einer Betriebsdauer bis zur Ausgabe des Verkalkungssignals korreliert, wobei bei Erreichen von einem vorgegebenen Bruchteil der Betriebsdauer bis zur Ausgabe des Verkalkungssignals ein Verkalkungsvorwarnsignal ausgegeben wird.

10. Elektrogerät (150) mit einer Vorrichtung (100) zum Erhitzen von Wasser (111) nach einem der Ansprüche 1 bis 6.
